# FASCICULE DE BREVET EUROPEEN

(11) **EP 2 894 262 B1**
(45) Date de publication et mention de la délivrance du brevet: **03.11.2021**
(21) Numéro de dépôt: 14193858.9
(22) Date de dépôt: 19.11.2014
(51) Int. Cl.: E02F 3/88, B60K 25/02, E02F 3/90, E02F 7/06, F04D 25/02

(54) **ASPIRATRICE EXCAVATRICE ÉQUIPÉE D'ORGANES DE POMPAGE DE DÉCHETS ET DE GRAVATS**
SAUGBAGGER, DER MIT PUMPORGANE FÜR ABFÄLLE UND BAUSCHUTT AUSGESTATTET IST
SUCTION EXCAVATOR PROVIDED WITH MEMBERS FOR PUMPING WASTE MATERIAL AND RUBBLE

(30) Priorité: 09.01.2014 FR 1450146
(43) Date de publication de la demande: 15.07.2015
(73) Titulaire: Rivard, 49640 Daumeray (FR)
(72) Inventeur: Ollivier, Michel, 49220 Brain sur Longuenée (FR); Juvin, Florent, 49640 Daumeray (FR); Pessard, Mathieu, 72300 Notre Dame du Pé (FR)
(74) Mandataire: Cabinet HERRBURGER

(56) Documents cités:
- WO-A2-2009/133373
- DE-A1- 4 123 843
- DE-A1-102010 060 972
- DE-A1-102010 060 973
- DE-A1-102012 009 576
- DE-U1-202012 101 190
- JP-A- 2004 270 160

## Description

La présente invention a pour objet une aspiratrice excavatrice équipée d'organes de pompage de déchets et de gravats.

Un tel engin de travaux publics est classiquement constitué par un véhicule porteur équipé d'un moteur à combustion interne sur lequel sont montés un compartiment machine équipé d'organes de pompage de déchets et de gravats ainsi qu'une cuve subdivisée en un compartiment filtre adjacent au compartiment machine dans lequel est montée une garniture filtrante comportant une série de filtres à poussière, et en un compartiment de stockage des déchets et des gravats aspirés situé à l'arrière du véhicule porteur et équipé à sa partie arrière d'un bras aspirateur articulé relié à un circuit d'aspiration branché sur le côté aspiration des organes de pompage.

Il est à noter que dans le cadre de cette description, les termes avant et arrière doivent être compris dans le sens allant de la cabine du conducteur du véhicule porteur vers le bras aspirateur articulé.

La cuve d'une telle aspiratrice excavatrice peut basculer transversalement autour d'un axe de basculement horizontal essentiellement parallèle à son axe longitudinal médian entre d'une part une position redressée ou position de travail dans laquelle des déchets et des gravats peuvent être aspirés et transférés dans le compartiment de stockage et d'autre part une position basculée ou position de vidange.

Les aspiratrices excavatrices du type susmentionné peuvent avantageusement être utilisées dans le cadre de nombreuses activités telles que le creusement de tranchées sur routes ou dans des zones urbaines sans risque de détérioration des canalisations souterraines, ou pour aspirer des gravats sur des terrasses ou en partie haute de bâtiments, ou encore pour effectuer des opérations de déneigement.

Les organes de pompage de déchets et de gravats équipant le compartiment machine des aspiratrices excavatrices actuellement disponibles sur le marché sont constitués soit par plusieurs ventilateurs montés en série dont les dépressions s'ajoutent soit par plusieurs pompes à vide de débit moindre montées en parallèle.

De tels organes de pompage présentent l'inconvénient de nécessiter de nombreuses tuyauteries et changements de direction qui entrainent d'importantes pertes de charge et par suite diminuent notablement le rendement global du système.

Pour remédier à cet inconvénient, on a eu l'idée conformément à l'invention, de remplacer les organes de pompage de déchets et de gravats classiques par une pompe aspirante unique de grande puissance pouvant générer un débit supérieur à 22.000 m³/h et une dépression supérieure à 25.000 Pascal entre ses orifices d'aspiration et de refoulement.

Une telle pompe qui correspond à une pompe centrifuge multi-étages à plusieurs aubes présente un très important moment d'inertie.

Il est à noter, que, en fonction des besoins, il est possible, en augmentant le nombre d'étages de la pompe de générer des différences de pression plus importantes.

Toutefois, la grande puissance et la vitesse de rotation très élevée de telles pompes aspirantes rendent très difficile leur mise en marche et les différentes solutions techniques qui ont été proposées à ce jour pour résoudre ce problème ne sont pas compatibles avec les exigences auxquelles doivent satisfaire des systèmes embarqués sur les véhicules porteurs d'aspiratrices excavatrices du type susmentionné.

En effet, le démarrage d'une telle pompe par le moteur du véhicule porteur aurait pour résultat de faire caler ce moteur ou d'endommager le système d'entrainement de la pompe.

Pour remédier à ces inconvénients, il est proposé conformément à l'invention d'adjoindre à la pompe aspirante unique constitutive des organes de pompage des déchets et des gravats des moyens d'entrainement de l'arbre de rotation de cette pompe aspirante comportant d'une part des organes d'entrainement hydrauliques et d'autre part des organes d'entrainement mécaniques actionnés à partir du moteur du véhicule porteur ainsi que des organes d'embrayage permettant d'accoupler et de désaccoupler sélectivement et automatiquement ces organes d'entrainement et l'arbre de rotation de la pompe aspirante dans des conditions de vitesse maitrisées.

Selon l'invention, l'arbre de rotation de la pompe aspirante est ainsi entrainé par les organes d'entrainement hydrauliques entre son démarrage et l'atteinte d'une vitesse de seuil prédéfinie puis par les organes d'entrainement mécaniques jusqu'à une vitesse maximum permettant d'obtenir le débit de travail souhaité.

Il est à noter que conformément au document JP 2004 270 160 A, on a déjà proposé une pompe aspiratrice excavatrice du type susmentionné constituée par un véhicule porteur équipé d'un moteur à combustion interne sur lequel sont montés un compartiment machine équipé d'organes de pompage de déchets et de gravats constitués par une pompe aspirante unique ainsi qu'une cuve subdivisée en un compartiment filtre adjacent au compartiment machine dans lequel est montée une garniture filtrante et en un compartiment de stockage des déchets et des gravats aspirés situé à l'arrière du véhicule porteur et équipé à sa partie arrière d'un bras aspirateur articulé relié à un circuit d'aspiration branché sur le côté aspiration des organes de pompage, cette cuve pouvant basculer transversalement autour d'un axe de basculement horizontal essentiellement parallèle à son axe longitudinal médian entre d'une part une position redressée ou position de travail dans laquelle les déchets et les gravats peuvent être aspirés et transférés dans le compartiment de stockage, et d'autre part une position basculée ou position de vidange.

Toutefois, conformément à ce document, la pompe aspirante unique constituant les organes de pompage des déchets et des gravats n'est pas une pompe aspirante de grande puissance générant un fort débit et une grande différence de pression entre ses orifices d'aspiration et de refoulement au sens de l'invention.

De surcroît, cette pompe aspirante unique n'est pas associée à des moyens d'entrainement de l'arbre de rotation de celle-ci comportant d'une part des organes d'entrainement hydrauliques et d'autre part des organes d'entrainement mécaniques actionnés à partir du moteur du véhicule porteur ainsi que des organes d'embrayage permettant d'accoupler et de désaccoupler sélectivement et automatiquement ces organes d'entrainement et l'arbre de rotation de la pompe aspirante dans des conditions de vitesse maitrisées.

Selon une autre caractéristique de l'invention, les organes d'entrainement hydrauliques sont constitués par un moteur hydraulique ou lanceur alimenté en huile par une pompe de démarrage et coopérant avec un ensemble de poulies de liaison d'axes parallèles pouvant être entrainées par ce lanceur par l'intermédiaire de courroies de liaison.

L'une de ces poulies de liaison ou poulie de démarrage est montée sur l'arbre de rotation du lanceur par l'intermédiaire d'un embrayage de démarrage faisant partie intégrante des organes d'embrayage et permettant son accouplement ou son désaccouplement tandis qu'une autre de ces poulies de liaison ou poulie d'entrainement est solidaire de l'arbre de rotation de la pompe aspirante.

Selon l'invention, l'ensemble de poulies de liaison comporte également avantageusement une poulie de mesure équipée d'un capteur de mesure permettant de mesurer en permanence la vitesse de rotation de l'arbre de la pompe aspirante.

Il est à noter que la pompe de démarrage est de préférence flasquée à l'arrière de la boite de vitesse du véhicule porteur.

Selon une autre caractéristique de l'invention, les organes d'entrainement mécaniques comportent une boite de coupure montée sur l'arbre de transmission du véhicule porteur entre la boite de vitesse de ce véhicule et le pont arrière de celui-ci.

Cette boite de coupure comporte un arbre de transfert permettant à l'arbre de transmission du véhicule porteur d'entrainer en rotation, après désaccouplement du pont arrière, un arbre de renvoi sur lequel est montée une poulie de renvoi de l'ensemble de poulies de liaison.

Cet arbre de renvoi est monté sur l'arbre de transfert de la boite de coupure par l'intermédiaire d'un embrayage faisant lui-aussi partie intégrante des organes d'embrayage et permettant son accouplement ou son désaccouplement.

Par suite, lorsque l'arbre de renvoi est accouplé à l'arbre de transmission du véhicule porteur par l'intermédiaire de l'arbre de transfert de la boite de coupure, la poulie de renvoi entraine l'arbre de rotation de la pompe aspirante par l'intermédiaire de la poulie d'entrainement qui est solidaire de cet arbre et d'une courroie de liaison montée entre ces deux poulies.

Selon une autre caractéristique de l'invention, les moyens d'entrainement de l'arbre de rotation de la pompe aspirante comportent un capteur de vitesse monté sur le véhicule porteur et permettant de mesurer en permanence de façon indirecte la vitesse de rotation de l'arbre de transfert de la boite de coupure lorsque celui-ci tourne.

Selon l'invention, les moyens d'entrainement de l'arbre de rotation de la pompe aspirante comprennent ainsi deux capteurs, à savoir un capteur de mesure qui permet de mesurer en permanence la vitesse de rotation de l'arbre de la pompe aspirante et un capteur de vitesse permettant de mesurer en permanence la vitesse de rotation de l'arbre de transfert de la boite de coupure.

Selon une caractéristique préférentielle de l'invention, les moyens d'entrainement de l'arbre de rotation de la pompe aspirante comprennent également une unité de commande électronique permettant de désaccoupler la poulie de démarrage et le lanceur et d'accoupler l'arbre de renvoi et l'arbre de transfert lorsque les vitesses mesurées par ces deux capteurs sont situées dans une plage prédéfinie autour de la vitesse de seuil.

Cette vitesse de seuil peut avantageusement être de l'ordre de 1.500 tours/min.

Cette caractéristique permet donc de garantir la synchronisation de la vitesse de l'arbre de rotation de la pompe aspirante et de la vitesse de l'arbre de transfert de la boite de coupure lors de la commutation de l'entrainement de cette pompe aspirante entre les organes d'entrainement hydrauliques et les organes d'entrainement mécaniques.

Par ailleurs, il est à noter que lorsque l'arbre de rotation de la pompe aspirante est entrainé à grande vitesse mais que le bras aspirateur articulé est au repos, (c'est-à-dire n'aspire pas des déchets et des gravats) et donc lorsque cette pompe ne génère pas une différence de pression importante entre ses orifices d'aspiration et de refoulement, la puissance consommée est maximum et entraine des risques de faire caler le moteur du véhicule porteur ou d'endommager le système d'entrainement de la pompe.

Selon une autre caractéristique préférentielle de l'invention permettant de remédier à cet inconvénient, l'unité de commande électronique coopère avec des détecteurs de mesure de la dépression dans la cuve, de la pression atmosphérique et de la température ambiante pour limiter la vitesse de rotation de la pompe aspirante lorsque la différence de pression entre les orifices d'aspiration et de refoulement de cette pompe atteint une valeur critique.

Cette caractéristique permet ainsi de diminuer la vitesse du moteur du véhicule porteur en présence de faibles différences de pression, donc d' « écrêter » la puissance maximum du système pour éviter de faire caler ce moteur ou d'endommager le système d'entrainement de la pompe.

Cette caractéristique selon laquelle on limite la puissance de la pompe aspirante permet de réduire d'environ 25 % la puissance maximum consommée.

Les caractéristiques de l'aspiratrice excavatrice équipée d'organes de pompage des déchets et des gravats qui fait l'objet de l'invention seront décrites plus en détail en se référant aux dessins non limitatifs annexés dans lesquels :
- la figure 1 est une vue en perspective schématique représentant la pompe aspirante ainsi que le moteur hydraulique susceptible d'entrainer cette pompe aspirante,
- la figure 2 est un schéma représentant les organes d'entrainement mécaniques actionnés à partir du moteur du véhicule porteur.

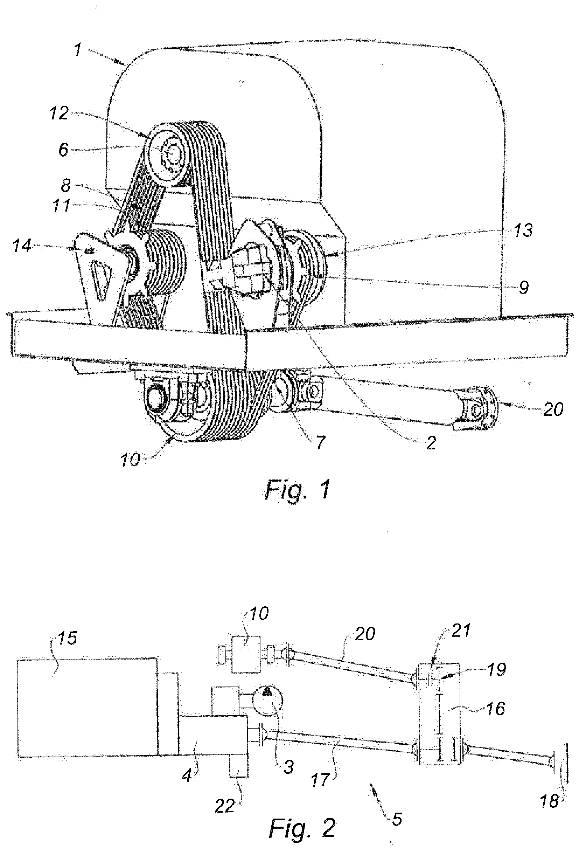

Selon la figure 1, la pompe aspirante 1 est entrainée à faible vitesse de rotation, c'est-à-dire entre son démarrage et une vitesse de seuil prédéfinie par un moteur hydraulique ou lanceur 2.

Selon la figure 2, ce lanceur 2 est alimenté en huile par une pompe de démarrage 3 flasquée à l'arrière de la boite de vitesses 4 du véhicule porteur 5 qui est représentée schématiquement sur cette figure.

Selon la figure 1, le lanceur 2 peut entrainer l'arbre de rotation 6 de la pompe aspirante 1 par l'intermédiaire d'un ensemble de poulies de liaison et de courroies de liaison 7 et 8.

Cet ensemble de poulies de liaison comprend plus précisément quatre poulies, à savoir une poulie de démarrage 9, une poulie de renvoi 10, une poulie de mesure 11 et une poulie d'entrainement 12.

La poulie de démarrage 9 est montée sur l'arbre de rotation du lanceur 2 par l'intermédiaire d'un embrayage de démarrage 13 permettant son accouplement ou son désaccouplement avec cet arbre.

La poulie d'entrainement 12 est solidaire de l'arbre de rotation 6 de la pompe aspirante 1.

La poulie de mesure 11 est équipée d'un capteur de mesure 14 qui permet de mesurer en permanence la vitesse de rotation de l'arbre 6 de la pompe aspirante 1.

La fonction de la poulie de renvoi 10 sera décrite plus en détail dans la suite de cet exposé.

Lorsque le lanceur 2 est entrainé en rotation et que la poulie de démarrage est accouplée à l'arbre de ce lanceur par l'embrayage 13, la rotation de la poulie de démarrage 9 entraine la rotation de la poulie de renvoi 10 par l'intermédiaire des courroies 7 et la rotation de la poulie de renvoi 10 entraine par l'intermédiaire des courroies 8 la rotation de la poulie de mesure 11 et de la poulie d'entrainement 12 solidaire de l'arbre de rotation 6 de la pompe d'aspiration 1.

Lorsque l'arbre de rotation 6 de cette pompe d'aspiration 1 a atteint la vitesse de seuil, l'embrayage 13 désaccouple la poulie de démarrage 9 du lanceur 2 de sorte que la pompe aspirante 1 soit entrainée par des organes d'entrainement mécaniques à partir du moteur 15 du véhicule porteur 5.

Selon la figure 2, ces organes d'entrainement mécaniques comportent essentiellement une boite de coupure 16 montée sur l'arbre de transmission 17 du véhicule porteur 5 entre la boite de vitesse 4 de ce véhicule et le pont arrière 18 de celui-ci.

La boite de coupure 16 comporte un arbre de transfert 19 qui, après désaccouplement du pont arrière 18 du véhicule porteur 5 est entrainé par l'arbre de transmission 17 de ce véhicule.

Comme représenté sur la figure 2, l'arbre de transfert 19 de la boite de coupure 16 entraine en rotation un arbre de renvoi 20 sur lequel est montée la poulie de renvoi 10 de l'ensemble de poulies de liaison représentées sur la figure 1.

Un embrayage 21 permet l'accouplement ou le désaccouplement de l'arbre de renvoi 20 et de l'arbre de transfert 19 de la boite de coupure 16.

Selon les figures 1 et 2, le moteur 15 du véhicule porteur 5 permet ainsi après accouplement de l'arbre de transfert 19 et de l'arbre de renvoi 20 l'entrainement mécanique de l'arbre de rotation 6 de la pompe aspirante 1 par l'intermédiaire de la poulie de renvoi 10 qui entraine la poulie d'entrainement 12 solidaire de l'arbre de rotation 6 de cette pompe aspirante par l'intermédiaire des courroies 8.

Selon la figure 2, les organes d'entrainement de l'arbre de rotation 6 de la pompe aspirante 1 comportent en outre un capteur de vitesse 22 qui permet de mesurer en permanence et de façon indirecte la vitesse de rotation de l'arbre de transfert 19 de la boite de coupure 16 lorsque celui-ci tourne.

Une unité de commande électronique non représentée sur les figures permet de désaccoupler la poulie de démarrage 9 et le lanceur 2 et d'accoupler l'arbre de renvoi 20 et l'arbre de transfert 19 de la boite de coupure 16 en actionnant les embrayages 13 et 21 lorsque les vitesses de rotation mesurées par le capteur de mesure 14 et par le capteur de vitesse 22 sont synchronisés et atteignent la vitesse de seuil de sorte que la pompe aspirante 1 puisse être entrainée à partir du moteur 15 du véhicule porteur 5.

### NOMENCLATURE

- 1: Pompe aspirante
- 2: Moteur hydraulique ou lanceur
- 3: Pompe de démarrage
- 4: Boite de vitesse
- 5: Véhicule porteur
- 6: Arbre de rotation
- 7: Courroies
- 8: Courroies
- 9: Poulie de démarrage
- 10: Poulie de renvoi
- 11: Poulie de mesure
- 12: Poulie d'entrainement
- 13: Embrayage de démarrage
- 14: Capteur de mesure
- 15: Moteur du véhicule porteur
- 16: Boite de coupure
- 17: Arbre de transmission
- 18: Pont arrière
- 19: Arbre de transfert
- 20: Arbre de renvoi
- 21: Embrayage
- 22: Capteur de vitesse

## Revendications

1. Aspiratrice excavatrice constituée par un véhicule porteur (5) équipé d'un moteur à combustion interne (15) sur lequel sont montés un compartiment machine équipé d'organes de pompage de déchets et de gravats ainsi qu'une cuve subdivisée en un compartiment filtre adjacent au compartiment machine dans lequel est montée une garniture filtrante et en un compartiment de stockage des déchets et des gravats aspirés situé à l'arrière du véhicule porteur (5) et équipé à sa partie arrière d'un bras aspirateur articulé relié à un circuit d'aspiration branché sur le côté aspiration des organes de pompage, cette cuve pouvant basculer transversalement autour d'un axe de basculement horizontal essentiellement parallèle à son axe longitudinal médian entre d'une part une position redressée ou position de travail dans laquelle les déchets et les gravats peuvent être aspirés et transférés dans le compartiment de stockage, et d'autre part une position basculée ou position de vidange,
**caractérisée en ce que**
les organes de pompage des déchets et des gravats sont constitués par une pompe aspirante unique de grande puissance (1) pouvant générer un débit supérieur à 22.000 m³/h et une dépression supérieure à 25.000 Pascal entre ses orifices d'aspiration et de refoulement, et par des moyens d'entrainement de l'arbre de rotation (6) de cette pompe aspirante (1) comportant d'une part des organes d'entrainement hydrauliques et d'autre part des organes d'entrainement mécaniques actionnés à partir du moteur (15) du véhicule porteur (5), ainsi que des organes d'embrayage permettant d'accoupler et de désaccoupler sélectivement et automatiquement ces organes d'entrainement et l'arbre de rotation (6) de la pompe aspirante (1) dans des conditions de vitesse maitrisées de sorte que l'arbre de rotation (6) de la pompe aspirante (1) soit entrainé par les organes d'entrainement hydrauliques entre son démarrage et l'atteinte d'une vitesse de seuil prédéfinie puis par les organes d'entrainement mécaniques jusqu'à sa vitesse de travail.

2. Aspiratrice excavatrice conforme à la revendication 1,
**caractérisée en ce que**
les organes d'entrainement hydrauliques sont constitués par un moteur hydraulique ou lanceur (2) alimenté en huile par une pompe de démarrage (3) de préférence flasquée à l'arrière de la boite de vitesse (4) du véhicule porteur (5) coopérant avec un ensemble de poulies de liaison (9, 10, 11, 12) d'axes parallèles pouvant être entrainées par ce lanceur (2) par l'intermédiaire de courroies de liaison (7, 8) et dont l'une de ces poulies de liaison ou poulie de démarrage (9) est montée sur l'arbre de rotation du lanceur (2) par l'intermédiaire d'un embrayage de démarrage (13) permettant son accouplement ou son désaccouplement, tandis qu'une autre poulie de liaison ou poulie d'entrainement (12) est solidaire de l'arbre de rotation (6) de la pompe aspirante (1).

3. Aspiratrice excavatrice conforme à la revendication 2,
**caractérisée en ce que**
l'ensemble de poulies de liaison (9, 10, 11, 12) comporte une poulie de mesure (11) équipée d'un capteur de mesure (14) permettant de mesurer en permanence la vitesse de rotation de l'arbre de la pompe aspirante (1).

4. Aspiratrice excavatrice conforme à la revendication 3,
**caractérisée en ce que**
les organes d'entrainement mécaniques comportent une boite de coupure (16) montée sur l'arbre de transmission (17) du véhicule porteur (5) entre la boite de vitesse (4) de ce véhicule (5) et le pont arrière (18) de celui-ci et permettant à l'arbre de transmission (17) du véhicule porteur (5), après désaccouplement du pont arrière (18) d'entrainer en rotation par l'intermédiaire d'un arbre de transfert (19) un arbre de renvoi (20) sur lequel est montée une poulie de renvoi (10) de l"ensemble de poulies de liaison.

5. Aspiratrice excavatrice conforme à la revendication 4,
**caractérisée en ce que**
l'arbre de renvoi (20) est monté sur l'arbre de transfert (19) de la boite de coupure (16) par l'intermédiaire d'un embrayage (21) permettant son accouplement ou son désaccouplement.

6. Aspiratrice excavatrice conforme à la revendication 5,
**caractérisée en ce que**
les moyens d'entrainement de l'arbre de rotation (6) de la pompe aspirante (1) comportent un capteur de vitesse (22) permettant de mesurer en permanence de façon indirecte la vitesse de rotation de l'arbre de transfert (19) de la boite de coupure (16) lorsque celui-ci tourne.

7. Aspiratrice excavatrice conforme à la revendication 6,
**caractérisée en ce que**
les moyens d'entrainement de l'arbre de rotation (6) de la pompe aspirante (1) comprennent une unité de commande électronique permettant de désaccoupler la poulie de démarrage (9) et le lanceur (2) et d'accoupler l'arbre de renvoi (20) et l'arbre de transfert (19) lorsque les vitesses mesurées par le capteur de mesure (14) et par le capteur de vitesse (22) sont situées dans une plage prédéfinie autour de la vitesse de seuil.

8. Aspiratrice excavatrice conforme à la revendication 7,
**caractérisée en ce que**
l'unité de commande électronique coopère avec des détecteurs de mesure de la dépression dans la cuve, de la pression atmosphérique et de la température ambiante pour limiter la vitesse de rotation de l'arbre de la pompe aspirante (1) lorsque la différence de pression entre les orifices d'aspiration et de refoulement de cette pompe atteint une valeur critique.

## Patentansprüche

1. Saugbagger, der durch ein Trägerfahrzeug (5) gebildet ist, das mit einem Verbrennungsmotor (15) ausgestattet ist, an dem eine mit Pumporganen für Abfälle und Bauschutt ausgestattete Maschinenkammer sowie ein Tank angebracht sind, der unterteilt ist in eine Filterkammer, die zu der Maschinenkammer benachbart ist und in der ein Filtereinsatz angebracht ist, und in eine Speicherkammer für angesaugte Abfälle und Bauschutt, die sich im hinteren Teil des Trägerfahrzeugs (5) befindet und an ihrem hinteren Abschnitt mit einem gelenkigen Saugarm ausgestattet ist, der mit einem an die Saugseite der Pumporgane angeschlossenen Saugkreis verbunden ist, wobei dieser Tank quer um eine horizontale Kippachse, die im Wesentlichen parallel zu seiner mittleren Längsachse ist, zwischen einer aufgerichteten Position oder Arbeitsposition einerseits, in welcher die Abfälle und der Bauschutt angesaugt und in die Speicherkammer überführt werden können, und einer gekippten Position oder Entleerungsposition andererseits schwenken kann,
**dadurch gekennzeichnet, dass**
die Pumporgane für Abfälle und Bauschutt gebildet sind durch eine einzige Hochleistungssaugpumpe (1), die einen hohen Durchsatz von über 22.000 m³/h und einen Druck von über 25.000 Pascal zwischen der Saug- und der Auslassöffnung erzeugen kann, und durch Antriebsmittel für die Drehwelle (6) dieser Saugpumpe (1), die einerseits hydraulische Antriebsorgane und andererseits mechanische Antriebsorgane, die vom Motor (15) des Trägerfahrzeugs (5) aus betätigt werden, sowie Kupplungsorgane beinhalten, die es ermöglichen, diese Antriebsorgane und die Drehwelle (6) der Saugpumpe (1) selektiv und automatisch unter gesteuerten Drehzahlbedingungen derart einzurücken und auszurücken, dass die Drehwelle (6) und die Saugpumpe (1) durch die hydraulischen Antriebsorgane zwischen dem Starten und dem Erreichen einer vordefinierten Schwellendrehzahl und dann durch die mechanischen Antriebsorgane bis zu ihrer Arbeitsdrehzahl angetrieben werden.

2. Saugbagger nach Anspruch 1,
**dadurch gekennzeichnet, dass**
die hydraulischen Antriebsorgane gebildet sind durch einen Hydraulikmotor oder Anlasser (2), der mit Öl durch eine Startpumpe (3) versorgt wird, die bevorzugt an der Rückseite des Getriebes (4) des Trägerfahrzeugs (5) angeflanscht ist und mit einem Satz von Verbindungsriemenscheiben (9, 10, 11, 12) von parallelen Achsen zusammenwirkt, die durch diesen Anlasser (2) über Verbindungsriemen (7, 8) angetrieben werden können, und wobei eine dieser Verbindungsriemenscheiben oder Startriemenscheibe (9) an der Drehwelle des Anlassers (2) über eine Startkupplung (13) angebracht ist, die dessen Einrücken und Ausrücken ermöglicht, während eine andere Verbindungsriemenscheibe oder Antriebsriemenscheibe (12) einstückig mit der Drehwelle (6) der Saugpumpe (1) ausgebildet ist.

3. Saugbagger nach Anspruch 2,
**dadurch gekennzeichnet, dass**
der Satz von Verbindungsriemenscheiben (9, 10, 11, 12) eine Messriemenscheibe (11) beinhaltet, die mit einem Messsensor (14) ausgestattet ist, der es ermöglicht, kontinuierlich die Drehzahl der Welle der Saugpumpe (1) zu messen.

4. Saugbagger nach Anspruch 3,
**dadurch gekennzeichnet, dass**
die mechanischen Antriebsorgane einen Abschaltkasten (16) beinhalten, der an der Antriebswelle (17) des Trägerfahrzeugs (5) zwischen dem Getriebe (4) dieses Fahrzeugs (5) und der Hinterachse (18) davon angebracht ist und es der Antriebswelle (17) des Trägerfahrzeugs (5) nach Ausrücken der Hinterachse (18) ermöglicht, über eine Übertragungswelle (19) eine Vorgelegewelle (20) drehend anzutreiben, an der eine Umlenkriemenscheibe (10) des Satzes von Verbindungsriemenscheiben angebracht ist.

5. Saugbagger nach Anspruch 4,
**dadurch gekennzeichnet, dass**
die Vorgelegewelle (20) an der Übertragungswelle (19) des Abschaltkastens (16) über eine Kupplung (21) angebracht ist, die dessen Einrücken und Ausrücken ermöglicht.

6. Saugbagger nach Anspruch 5,
**dadurch gekennzeichnet, dass**
die Antriebsmittel der Drehwelle (6) der Saugpumpe (1) einen Drehzahlsensor (22) beinhalten, der es ermöglicht, kontinuierlich auf indirekte Weise die Drehzahl der Übertragungswelle (19) des Abschaltkastens (16) zu messen, während diese sich dreht.

7. Saugbagger nach Anspruch 6,
**dadurch gekennzeichnet, dass**
die Antriebsmittel der Drehwelle (6) der Saugpumpe (1) eine elektronische Steuereinheit beinhalten, die es ermöglicht, die Startriemenscheibe (9) und den Anlasser (2) auszurücken und die Vorgelegewelle (20) und die Übertragungswelle (19) einzurücken, wenn die vom Messsensor (14) und vom Drehzahlsensor (22) gemessenen Drehzahlen in einem vordefinierten Bereich um die Schwellendrehzahl liegen.

8. Saugbagger nach Anspruch 7,
**dadurch gekennzeichnet, dass**
die elektronische Steuereinheit mit Messfühlern für den Druck in dem Tank, den Atmosphärendruck und die Umgebungstemperatur zusammenwirkt, um die Drehzahl der Welle der Saugpumpe (1) zu begrenzen, wenn der Druckunterschied zwischen der Saug- und der Auslassöffnung dieser Pumpe einen kritischen Wert erreicht.

## Claims

1. Vacuum excavator consisting of a carrier vehicle (5) equipped with an internal combustion engine (15) on which are mounted a machine compartment equipped with waste and rubble pumping mechanisms as well as a tank subdivided into a filter compartment adjacent to the machine compartment in which a filter insert is fixed, and a storage compartment for vacuumed waste and rubble located at the rear of the carrier vehicle (5) and equipped at its rear part with an articulated suction arm connected to a suction circuit connected to the suction side of the pumping mechanisms, this tank being tiltable transversely around a horizontal tilting axis essentially parallel to its longitudinal centre line between, on the one hand, an upright position or working position in which the waste and rubble can be vacuumed and transferred into the storage compartment and, on the other hand, a tilted position or emptying position,
**characterised in that**
the waste and rubble pumping mechanisms consist of a single high-powered suction pump (1) capable of generating a flow rate of more than 22,000 m/h and a vacuum of more than 25,000 Pascal between its suction and discharge orifices, and of means for driving the rotation shaft (6) of this suction pump (1) comprising on the one hand hydraulic drive mechanisms and on the other hand mechanical drive mechanisms actuated from the engine (15) of the carrier vehicle (5), as well as clutch mechanisms enabling these drive mechanisms and the rotation shaft (6) of the suction pump (1) to be selectively and automatically coupled and uncoupled under controlled speed conditions so that the rotation shaft (6) of the suction pump (1) is driven by the hydraulic drive mechanisms between its start-up and the attainment of a predefined threshold speed and then by the mechanical drive mechanisms up to its working speed.

2. Vacuum excavator according to claim 1,
**characterised in that**
the hydraulic drive mechanisms consist of a hydraulic motor or starter (2) supplied with oil by a starting pump (3) preferably flanged to the rear of the gearbox (4) of the carrier vehicle (5) cooperating with a set of connecting pulleys (9, 10, 11, 12) with parallel axes which can be driven by this starter (2) via connecting belts (7, 8) and of which one of these connecting pulleys or starting pulley (9) is mounted on the rotation shaft of the starter (2) via a starting clutch (13), allowing it to be coupled or uncoupled, while another connecting pulley or driving pulley (12) is connected with the rotation shaft (6) of the suction pump (1).

3. Vacuum excavator according to claim 2,
**characterised in that**
the set of connecting pulleys (9, 10, 11, 12) has a measuring pulley (11) equipped with a measuring sensor (14) for continuously measuring the rotation speed of the shaft of the suction pump (1).

4. Vacuum excavator according to claim 3,
**characterised in that**
the mechanical drive mechanisms comprise a cut-off box (16) fixed on the transmission shaft (17) of the carrier vehicle (5) between the gearbox (4) of this vehicle (5) and the rear axle (18) of the latter and enabling the transmission shaft (17) of the carrier vehicle (5), after uncoupling from the rear axle (18), to drive in rotation via a transfer shaft (19), a countershaft (20) on which is fixed a return pulley (10) of the set of connecting pulleys.

5. Vacuum excavator according to claim 4,
**characterised in that**
the countershaft (20) is mounted on the transfer shaft (19) of the cut-off box (16) via a clutch (21) which allows it to be coupled or uncoupled.

6. Vacuum excavator according to claim 5,
**characterised in that**
the drive means for the rotation shaft (6) of the suction pump (1) comprise a speed sensor (22) enabling the speed of rotation of the transfer shaft (19) of the cut-off box (16) to be measured continuously and indirectly as it rotates.

7. Vacuum excavator according to claim 6,
**characterised in that**
the drive means for the rotation shaft (6) of the suction pump (1) comprise an electronic control unit for uncoupling the starting pulley (9) and the starter (2) and for coupling the countershaft (20) and the transfer shaft (19) when the speeds measured by the measurement sensor (14) and by the speed sensor (22) are located in a predefined range around the threshold speed.

8. Vacuum excavator according to claim 7,
**characterised in that**
the electronic control unit cooperates with sensors for measuring the vacuum in the tank, the atmospheric pressure and the ambient temperature in order to limit the rotation speed of the shaft of the suction pump (1) when the pressure difference between the suction and discharge orificies of this pump reaches a critical value.
